# EUROPEAN PATENT APPLICATION

(11) **EP 4 282 764 A1**
(43) Date of publication of application: **29.11.2023**
(21) Application number: 23175745.1
(22) Date of filing: 26.05.2023
(51) Int. Cl.: B64D 35/04, B64C 11/48, B64C 11/46, B64C 27/14, B64C 27/30, F02C 3/107

(54) **AIRCRAFT PROPULSION SYSTEM WITH ADJUSTABLE THRUST PROPULSOR**

(30) Priority: 26.05.2022 US 202263346174 P
(71) Applicant: RTX Corporation, Farmington, CT 06032 (US)
(72) Inventor: HANRAHAN, Paul R., Sedona, 86351 (US)
(74) Representative: Dehns

(57) **Abstract**

A propulsion system (20) is provided for an aircraft. This aircraft propulsion system (20) includes a gas turbine engine core (26), a first propulsor rotor (22) and a second propulsor rotor (24). The gas turbine engine core (26) includes a compressor section (46), a combustor section (47), a turbine section (48) and a rotating structure (68). The rotating structure (68) includes a turbine rotor (60) within the turbine section (48). The first propulsor rotor (22) is rotatably driven by the rotating structure (68) during a first mode and a second mode. The first propulsor rotor (22) includes a plurality of variable pitch blades (30). The variable pitch blades (30) include a first blade (30) configured to pivot between a thrust position and an idle position. The first blade (30) is in the thrust position during the first mode. The first blade (30) is in the idle position during the second mode. The second propulsor rotor (24) is rotatably driven by the rotating structure (68) during the second mode.

## Description

### BACKGROUND OF THE DISCLOSURE

### 1. Technical Field

This disclosure relates generally to an aircraft and, more particularly, to an aircraft propulsion system for alternately generating power for multi-directional propulsion.

### 2. Background Information

Various types and configurations of propulsion systems are known in the art for an aircraft. While these known aircraft propulsion systems have various benefits, there is still room in the art for improvement.

### SUMMARY OF THE DISCLOSURE

According to an aspect of the present disclosure, a propulsion system is provided for an aircraft. This aircraft propulsion system includes a gas turbine engine core, a first propulsor rotor and a second propulsor rotor. The gas turbine engine core includes a compressor section, a combustor section, a turbine section and a rotating structure. The rotating structure includes a turbine rotor within the turbine section. The first propulsor rotor is rotatably driven by the rotating structure during a first mode and a second mode. The first propulsor rotor includes a plurality of variable pitch blades. The variable pitch blades include a first blade configured to pivot between a thrust position and an idle position. The first blade is in the thrust position during the first mode. The first blade is in the idle position during the second mode. The second propulsor rotor is rotatably driven by the rotating structure during the second mode.

According to another aspect of the present disclosure, another propulsion system is provided for an aircraft. This aircraft propulsion system includes a gas turbine engine core, a first propulsor rotor, a second propulsor rotor and a transmission. The gas turbine engine core includes a compressor section, a combustor section, a turbine section and a rotating structure. The rotating structure includes a turbine rotor within the turbine section. The first propulsor rotor is coupled to the rotating structure during a first mode and a second mode. The first propulsor rotor is rotatable about an axis and includes a plurality of variable pitch blades. The variable pitch blades include a first blade movable between a first position during the first mode and a second position during the second mode. A first angle between a chord line of the first blade in the first position and the axis is less than sixty degrees. A second angle between the chord line of the first blade in the second position and the axis is greater than seventy degrees. The transmission is configured to couple the rotating structure to the second propulsor rotor during the second mode.

According to still another aspect of the present disclosure, another propulsion system is provided for an aircraft. This aircraft propulsion system includes a gas turbine engine core, a first propulsor rotor and a second propulsor rotor. The gas turbine engine core includes a compressor section, a combustor section, a turbine section and a rotating structure. The rotating structure includes a turbine rotor within the turbine section. The first propulsor rotor is rotatably driven by the rotating structure during a first mode and a second mode. The first propulsor rotor is configured to generate horizontal thrust during the first mode. The first propulsor rotor is configured to generate substantially no thrust (e.g., less than 40 pounds) during the second mode. The second propulsor rotor is rotatably driven by the rotating structure during the second mode. The second propulsor rotor is configured to generate vertical lift during the second mode.

The following optional features may be applied to any of the above aspects:
The first propulsor rotor may include a plurality of variable pitch blades. The variable pitch blades may include a first blade configured to pivot between a thrust position during the first mode and an idle position during the second mode.

The transmission may be configured to decouple the rotating structure from the second propulsor rotor during the first mode.

The first propulsor rotor may be configured to generate propulsive power in a first direction during the first mode. The second propulsor rotor may be configured to generate propulsive power in a second direction during the second mode.

The propulsion system may also include a transmission. This transmission may be configured to decouple the second propulsor rotor from the rotating structure during the first mode. The transmission may also or alternatively be configured to couple the second propulsor rotor to the rotating structure during the second mode.

The second propulsor rotor may include a plurality of fixed pitch rotor blades.

The first propulsor rotor may be rotatable about an axis. An angle between a chord line of the first blade in the thrust position and the axis may be less than sixty degrees.

The first propulsor rotor may be rotatable about an axis. An angle between a chord line of the first blade in the idle position and the axis may be greater than seventy degrees.

The first blade may pivot at least twenty degrees between the forward thrust position and the idle position.

The first propulsor rotor may be configured to generate at least twenty times more thrust during the first mode than during the second mode.

The first propulsor rotor may be configured to generate thrust during the first mode. The first propulsor rotor may also or alternatively be configured to generate substantially no thrust during the second mode.

The first propulsor rotor may be configured to generate horizontal thrust during the first mode. The second propulsor rotor may also or alternatively be configured to generate vertical lift during the second mode.

The first propulsor rotor may be rotatable about a first axis. The second propulsor rotor may be rotatable about a second axis that is angularly offset from the first axis.

The first propulsor rotor may be configured as or otherwise include a ducted rotor.

The second propulsor rotor may be configured as or otherwise include an open rotor.

The propulsion system may also include a geartrain coupling the rotating structure to the first propulsor rotor during the first mode and the second mode.

The geartrain may couple the rotating structure to the second propulsor rotor during the second mode.

The second propulsor rotor may be one of a plurality of second propulsor rotors rotatably driven by the rotating structure during the second mode.

The gas turbine engine core may also include a second rotating structure. The second rotating structure may include a compressor rotor within the compressor section and a second turbine rotor within the turbine section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic illustration of an aircraft propulsion system.
FIG. 2A is a side schematic illustration of blades of a variable pitch propulsor rotor in thrust positions.
FIG. 2B is a side schematic illustration of the blades of the variable pitch propulsor rotor in idle positions.
FIG. 3 is a partial schematic illustration of the aircraft propulsion system configured without a geartrain.
FIG. 4 is a partial schematic illustration of a gas turbine engine core with multi-staged compressor rotors.
FIG. 5 is a partial schematic illustration of a rotating structure coupled to and driving multiple propulsor rotors for generating propulsive lift.

### DETAILED DESCRIPTION

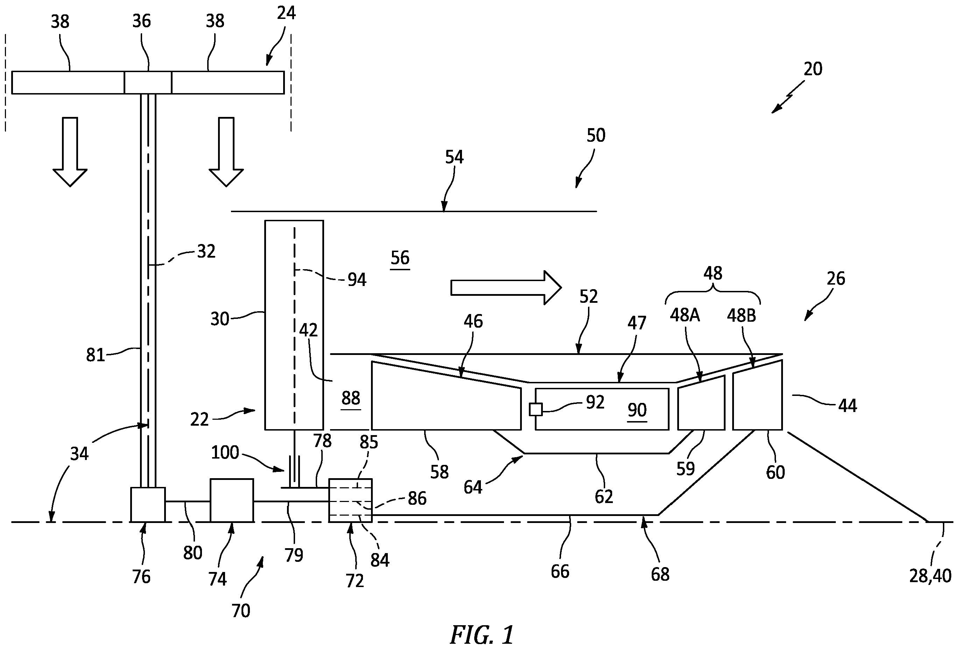

FIG. 1 schematically illustrates a propulsion system 20 for an aircraft. The aircraft may be an airplane, a helicopter, a drone (e.g., an unmanned aerial vehicle (UAV)), a spacecraft or any other manned or unmanned aerial vehicle. This aircraft may be configured as a vertical take-off and landing (VTOL) aircraft or a short take-off and vertical landing (STOVL) aircraft. The aircraft propulsion system 20 of FIG. 1, for example, is configured to generate power for first direction propulsion (e.g., propulsive thrust) during a first mode of operation and to generate power for second direction propulsion (e.g., propulsive lift) during a second mode of operation, where the first direction is different than (e.g., angularly offset from) the second direction. The first mode may be a horizontal (e.g., forward) flight mode where the first direction propulsion is substantially horizontal (e.g., within 5 degrees, 10 degrees, etc. of a horizontal axis) propulsive thrust. The second mode may be a vertical flight and/or hover mode where the second direction propulsion is substantially vertical (e.g., within 5 degrees, 10 degrees, etc. of a vertical axis) propulsive lift. The aircraft propulsion system 20, of course, may also be configured to generate both the first direction (e.g., horizontal) propulsion and the second direction (e.g., vertical) propulsion during a third (e.g., transition) mode of operation. The aircraft propulsion system 20 of FIG. 1 includes at least one bladed first propulsor rotor 22, at least one bladed second propulsor rotor 24 and a gas turbine engine core 26 configured to rotatably drive the first propulsor rotor 22 and the second propulsor rotor 24.

The first propulsor rotor 22 may be configured as a ducted rotor such as a fan rotor. The first propulsor rotor 22 of FIG. 1 is rotatable about a first rotor axis 28. This first rotor axis 28 is an axial centerline of the first propulsor rotor 22 and may be horizontal when the aircraft is on ground. The first propulsor rotor 22 includes at least a first rotor disk and a plurality of first rotor blades 30 (on visible in FIG. 1); e.g., fan blades. The first rotor blades 30 are distributed circumferentially around the first rotor disk in an annular array. Each of the first rotor blades 30 is connected to and projects radially (relative to the first rotor axis 28) out from the first rotor disk.

The second propulsor rotor 24 may be configured as an open rotor such as a propeller rotor or a helicopter (e.g., main) rotor. Of course, in other embodiments, the second propulsor rotor 24 may alternatively be configured as a ducted rotor such as a fan rotor; e.g., see dashed line duct. The second propulsor rotor 24 of FIG. 1 is rotatable about a second rotor axis 32. This second rotor axis 32 is an axial centerline of the second propulsor rotor 24 and may be vertical when the aircraft is on the ground. The second rotor axis 32 is angularly offset from the first rotor axis 28 by an included angle 34; e.g., an acute angle or a right angle. This included angle 34 may be between sixty degrees (60°) and ninety degrees (90°); however, the present disclosure is not limited to such an exemplary relationship. The second propulsor rotor 24 includes at least a second rotor disk 36 and a plurality of second rotor blades 38; e.g., open rotor blades. The second rotor blades 38 are distributed circumferentially around the second rotor disk 36 in an annular array. Each of the second rotor blades 38 is connected to and projects radially (relative to the second rotor axis 32) out from the second rotor disk 36.

The engine core 26 extends axially along a core axis 40 between a forward, upstream airflow inlet 42 and an aft, downstream exhaust 44. The core axis 40 may be an axial centerline of the engine core 26 and may be horizontal when the aircraft is on the ground. This core axis 40 may be parallel (e.g., coaxial) with the first rotor axis 28 and, thus, angularly offset from the second rotor axis 32. The engine core 26 of FIG. 1 includes a compressor section 46, a combustor section 47 and a turbine section 48. The turbine section 48 of FIG. 1 includes a high pressure turbine (HPT) section 48A and a low pressure turbine (LPT) section 48B (also sometimes referred to as a power turbine section).

The engine sections 46-48B are arranged sequentially along the core axis 40 within an engine housing 50. This engine housing 50 includes an inner case 52 (e.g., a core case) and an outer case 54 (e.g., a fan case). The inner case 52 may house one or more of the engine sections 46-48B; e.g., the engine core 26. The outer case 54 may house the first propulsor rotor 22. The outer case 54 of FIG. 1 also axially overlaps and extends circumferentially about (e.g., completely around) the inner case 52 thereby at least partially forming a bypass flowpath 56 radially between the inner case 52 and the outer case 54.

Each of the engine sections 46, 48A and 48B includes a bladed rotor 58-60 within that respective engine section 46, 48A, 48B. Each of these bladed rotors 58-60 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The compressor rotor 58 is connected to the HPT rotor 59 through a high speed shaft 62. At least (or only) these engine components 58, 59 and 62 collectively form a high speed rotating structure 64. This high speed rotating structure 64 is rotatable about the core axis 40. The LPT rotor 60 is connected to a low speed shaft 66. At least (or only) these engine components collectively form a low speed rotating structure 68. This low speed rotating structure 68 is rotatable about the core axis 40. The low speed rotating structure 68 and, more particularly, its low speed shaft 66 may project axially through a bore of the high speed rotating structure 64 and its high speed shaft 62.

The aircraft propulsion system 20 of FIG. 1 includes a powertrain 70 for (e.g., permanently, always) coupling the low speed rotating structure 68 to the first propulsor rotor 22 and (e.g., selectively, intermittently) coupling the low speed rotating structure 68 to the second propulsor rotor 24. The powertrain 70 of FIG. 1 includes a geartrain 72, a transmission 74 and a gear system 76; e.g., bevel gearing. The powertrain 70 of FIG. 1 also includes one or more shafts 78-81 and/or other torque transmission devices.

The geartrain 72 may be configured as an epicyclic geartrain such as, but not limited to, a planetary geartrain and/or a star geartrain. The geartrain 72 of FIG. 1, for example, includes a first component 84 (e.g., an inner gear such as a sun gear), a second component 85 (e.g., an outer gear such as a ring gear) and a third component 86 (e.g., a carrier supporting one or more intermediate gears such as planet or star gears), where the components 84-86 (or the gears attached thereto) are meshed or otherwise engaged with one another. The first component 84 is connected to the low speed rotating structure 68 and its low speed shaft 66. The second component 85 is connected to the first propulsor rotor 22 through the first propulsor shaft 78. The third component 86 is connected to an input of the transmission 74 through the geartrain output shaft 79.

An output of the transmission 74 is connected to an input of the gear system 76 through the transmission output shaft 80. This transmission 74 is configured to selectively couple (e.g., transfer torque between) the geartrain output shaft 79 and the transmission output shaft 80. During the first mode of operation, for example, the transmission 74 is configured to decouple the geartrain output shaft 79 from the transmission output shaft 80, thereby decoupling the low speed rotating structure 68 form the second propulsor rotor 24. During the second mode of operation (and the third mode of operation), the transmission 74 is configured to couple the geartrain output shaft 79 with the transmission output shaft 80, thereby coupling the low speed rotating structure 68 with the second propulsor rotor 24. The transmission 74 may be configured as a clutched transmission or a clutchless transmission.

An output of the gear system 76 is connected to the second propulsor rotor 24 through the second propulsor shaft 81. This gear system 76 provides a coupling between the transmission output shaft 80 rotating about the axis 28, 40 and the second propulsor shaft 81 rotating about the second rotor axis 32. The gear system 76 may also provide a speed change mechanism between the transmission output shaft 80 and the second propulsor shaft 81. The gear system 76, however, may alternatively provide a 1:1 rotational coupling between the transmission output shaft 80 and the second propulsor shaft 81 such that these shafts 80 and 81 rotate at a common (e.g., the same) speed. Furthermore, in some embodiments, the gear system 76 and the shaft 80 may be omitted where the functionality of the gear system 76 is integrated into the transmission 74.

During operation of the aircraft propulsion system 20, air enters the engine core 26 through the airflow inlet 42. This air is directed into a core flowpath 88 which extends sequentially through the compressor section 46, the combustor section 47, the HPT section 48A and the LPT section 48B to the exhaust 44. The air within this core flowpath 88 may be referred to as core air.

The core air is compressed by the compressor rotor 58 and directed into a (e.g., annular) combustion chamber 90 of a (e.g., annular) combustor in the combustor section 47. Fuel is injected into the combustion chamber 90 through one or more fuel injectors 92 (one visible in FIG. 1) and mixed with the compressed core air to provide a fuel-air mixture. This fuel-air mixture is ignited and combustion products thereof flow through and sequentially cause the HPT rotor 59 and the LPT rotor 60 to rotate. The rotation of the HPT rotor 59 drives rotation of the high speed rotating structure 64 and its compressor rotor 58. The rotation of the LPT rotor 60 drives rotation of the low speed rotating structure 68. The rotation of the low speed rotating structure 68 drives rotation of the first propulsor rotor 22 through the system components 72 and 78 during each mode of operation; e.g., the first, the second and the third modes of operation. The rotation of the low speed rotating structure 68 also drives rotation of the second propulsor rotor 24 through the system components 72, 74, 76 and 79-81 during a select mode or modes of operation; e.g., the second and the third modes of operation. However, during the first mode of operation, the transmission 74 decouples the low speed rotating structure 68 from the second propulsor rotor 24 such that the low speed rotating structure 68 does not drive rotation of the second propulsor rotor 24. The second propulsor rotor 24 may thereby be stationary (or windmill) during the first mode of operation.

During the first and third modes of operation, the rotation of the first propulsor rotor 22 propels bypass air (separate form the core air) through the aircraft propulsion system 20 and its bypass flowpath 56 to provide the first direction propulsion; e.g.., forward horizontal thrust. During the second and third modes of operation, the rotation of the second propulsor rotor 24 propels additional air (separate form the core air and the bypass air) to provide the second direction propulsion; e.g.., vertical lift. The aircraft may thereby takeoff, land and/or hover during the second and third modes of operation, and the aircraft may fly forward or otherwise move at least horizontally during the first and the third modes of operation.

During each mode of operation, the low speed rotating structure 68 is coupled to and drives rotation of the first propulsor rotor 22. As described above, rotation of the first propulsor rotor 22 generates horizontal thrust during the first and the third modes of operation to propel the aircraft horizontally forward. However, generating such horizontal thrust (or significant amounts of horizontal thrust) may hinder and/or be less advantageous to certain aircraft takeoff, landing and/or hovering operations during the second mode of operation. Furthermore, producing horizontal thrust with the first propulsor rotor 22 during the second mode of operation may also take away engine core power that could otherwise be provided to the second propulsor rotor 24 for vertical aircraft lift. The first propulsor rotor 22 of FIG. 1 is therefore configured as a variable pitch propulsor rotor capable of significantly reducing or eliminating generation of horizontal thrust by the first propulsor rotor 22 during at least (or only) the second mode of operation.

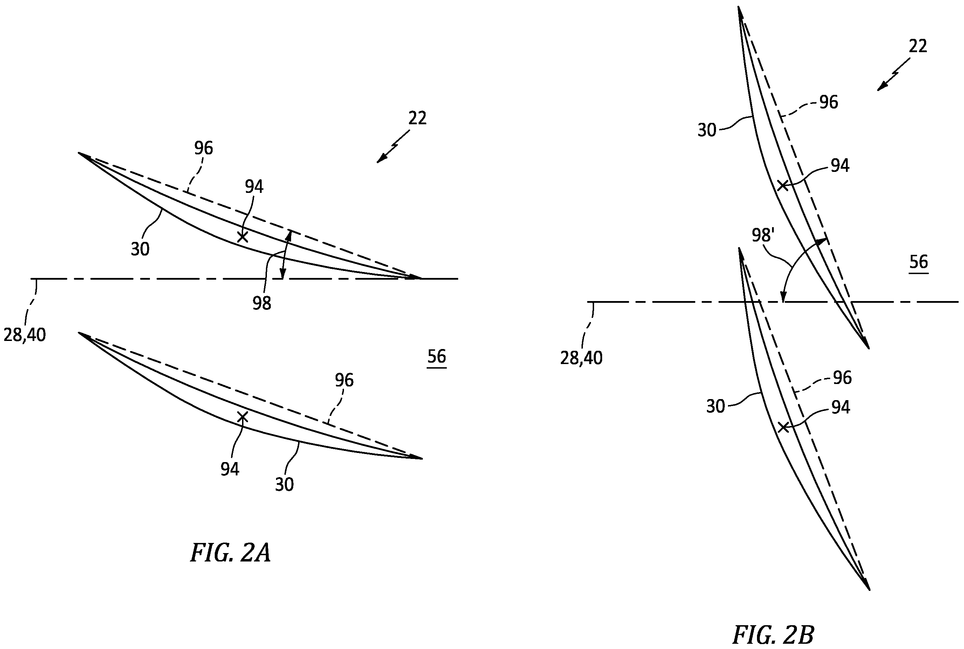

Referring to FIGS. 2A and 2B, each first rotor blade 30 is configured as a variable pitch blade. Each first rotor blade 30, for example, is configured to pivot about a blade axis 94 of the respective first rotor blade 30 between a thrust position (e.g., see FIG. 2A) and an idle position (e.g., see FIG. 2B); e.g., a low thrust or no thrust position. Each first rotor blade 30 may be in the thrust position of FIG. 2A during the first mode of operation. Each first rotor blade 30 may be in the idle position of FIG. 2B during the second mode of operation. Each first rotor blade 30 may be in an intermediate position between the thrust position of FIG. 2A and the idle position of FIG. 2B (or the thrust position of FIG. 2A) during the third mode of operation.

At the thrust position of FIG. 2A, a chord line 96 of the respective first rotor blade 30 is angularly offset from the first rotor axis 28 by a thrust position angle 98. This thrust position angle 98 is selected to facilitate (e.g., relatively high, maximum and/or efficient) thrust generation by the respective first rotor blade 30 and, more generally, the first propulsor rotor 22. The thrust position angle 98 is also or alternatively selected to open up flow through the first propulsor rotor 22. The thrust position angle 98 may be less than sixty degrees (60°); e.g., between sixty degrees (60°) and forty-five degrees (45°), between forty-five degrees (45°) and thirty degrees (30°), or between thirty degrees (30°) and fifteen degrees (15°) or less. The present disclosure, however, is not limited to the foregoing exemplary thrust position angles. Furthermore, a person of the skill in the art will appreciate the specific thrust position angle 98 may vary based on a specific profile of the respective first rotor blade 30.

At the idle position of FIG. 2B, the chord line 96 of the respective first rotor blade 30 is angularly offset from the first rotor axis 28 by an idle position angle 98'. This idle position angle 98' is selected to facilitate (e.g., relatively low, minimum, or no) thrust generation by the respective first rotor blade 30 and, more generally, the first propulsor rotor 22. The idle position angle 98' is also or alternatively selected to close off flow through the first propulsor rotor 22. The idle position angle 98' may be greater than seventy degrees (70°); e.g., between seventy degrees (70°) and seventy-five degrees (75°), between seventy-five degrees (75°) and eighty degrees (80°), or between eight degrees (80°) and eighty-five degrees (85°). The present disclosure, however, is not limited to the foregoing exemplary idle position angles. Furthermore, a person of the skill in the art will appreciate the specific idle position angle 98' may vary based on a specific profile of the respective first rotor blade 30.

As each first rotor blade 30 moves between the thrust position of FIG. 2A and the idle position of FIG. 2B, the respective first rotor blade 30 may pivot at least twenty degrees (20°) about its blade axis 94. Each first rotor blade 30, for example, may pivot between twenty degrees (20°) and thirty degrees (30°), between thirty degrees (30°) and forty degrees (40°), between forty degrees (40°) and fifty degrees (50°), or between fifty degrees (50°) and sixty degrees (60°) or more about the respective blade axis 94. The present disclosure, however, is not limited to the foregoing exemplary angles. Furthermore, a person of the skill in the art will appreciate the specific movement between the thrust position and the idle position may vary based on a specific profile of the respective first rotor blade 30.

In the idle position of FIG. 2B, the first rotor blades 30 and, more generally, the first propulsor rotor 22 generates relatively little or no first direction propulsion. In particular, while the first propulsor rotor 22 still rotates about its first rotor axis 28 during the second mode of operation (see also FIG. 1), the closing off of space between adjacent first rotor blades 30 significantly reduces a flow of the bypass air through the first propulsor rotor 22 and its bypass flowpath 56. Horizontal thrust generated by the first propulsor rotor 22 during the first mode (or the third mode) of operation may thereby be at least twenty times (20x), fifty times (50x), one-hundred times (100x) or more thrust / propulsive power generated by the first propulsor rotor 22 (if any at all) during the second mode of operation. Furthermore, because the thrust generated by (e.g., work performed by) the first propulsor rotor 22 is significantly reduced or eliminated during the second mode of operation, more rotational power may be transmitted from the low speed rotating structure 68 to the second propulsor rotor 24 during the second mode of operation. Thus, the movement of the first rotor blades 30 (see FIGS. 2A and 2B) not only reduces or eliminates horizontal thrust generated by the first propulsor rotor 22, but also increases vertical lift / propulsive power generated by the second propulsor rotor 24.

To move the first rotor blades 30 between their thrust and idle positions (e.g., see FIGS. 2A and 2B), the first propulsor rotor 22 of FIG. 1 includes a pitch change device 100; e.g., actuator. Various types and configurations of rotor blade pitch change devices are known in the art, and the present disclosure is not limited to any particular ones thereof. Examples of such pitch change devices are disclosed in U.S. Patent No. 4,124,330, U.S. Patent No. 4,718,823, U.S. Patent No. 5,391,055 and U.S. Publication No. 2013/0104522, each of which is assigned to the assignee of the present disclosure and hereby incorporated herein by reference in its entirety.

In some embodiments, the second propulsor rotor 24 may be configured as a fixed pitch propulsor rotor. Each second rotor blade 38, for example, may be configured as a fixed pitch blade. Of course, in other embodiments, the second propulsor rotor 24 may alternatively be configured as a variable pitch propulsor rotor. Each second rotor blade 38, for example, may be configured as a variable pitch blade.

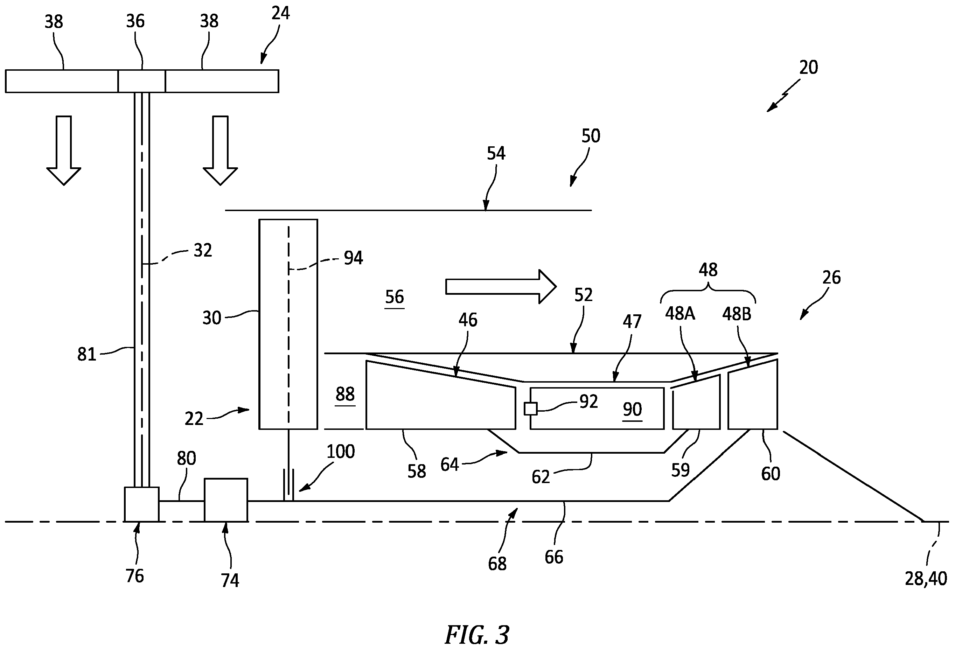

In some embodiments, the low speed rotating structure 68 is coupled to the first propulsor rotor 22 and/or the second propulsor rotor 24 through the geartrain 72. In other embodiments, referring to FIG. 3, the low speed rotating structure 68 may be coupled to the first propulsor rotor 22 and/or the second propulsor rotor 24 without a geartrain. The first propulsor rotor 22 of FIG. 3, for example, is coupled to the low speed shaft 66 through a direct connection such that the first propulsor rotor 22 rotates at a common (e.g., the same) speed with the low speed rotating structure 68.

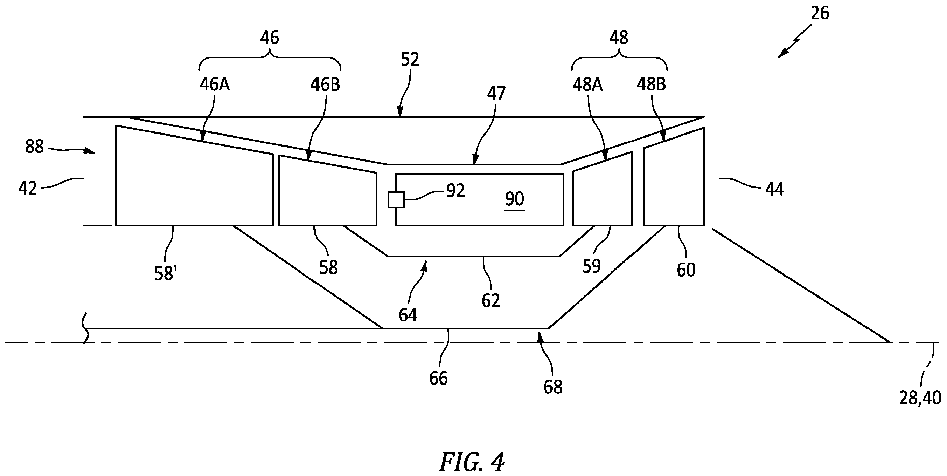

In some embodiments, referring to FIGS. 1 and 3, the low speed rotating structure 68 may be configured without a compressor rotor. In other embodiments, referring to FIG. 4, the low speed rotating structure 68 may include a low pressure compressor (LPC) rotor 58' arranged within a low pressure compressor (LPC) section 46A of the compressor section 46. In such embodiments, the compressor rotor 58 may be a high pressure compressor (HPC) rotor within a high pressure compressor (HPC) section 46B of the compressor section 46.

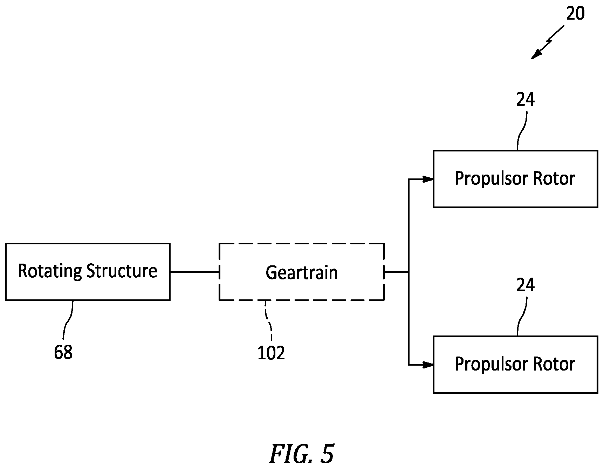

The engine core 26 may have various configurations other than those described above. The engine core 26, for example, may be configured with a single spool, with two spools (e.g., see FIGS. 1 and 3), or with more than two spools. The engine core 26 may be configured with one or more axial flow compressor sections, one or more radial flow compressor sections, one or more axial flow turbine sections and/or one or more radial flow turbine sections. The engine core 26 may be configured with any type or configuration of annular, tubular (e.g., CAN), axial flow and/or reverser flow combustor. The present disclosure therefore is not limited to any particular types or configurations of gas turbine engine cores. Furthermore, it is contemplated the engine core 26 of the present disclosure may drive more than the two propulsors 22 and 24. The aircraft propulsion system 20, for example, may include two or more of the first propulsor rotors 22 and/or two or more of the second propulsor rotors 24. For example, the aircraft propulsion system 20 of FIG. 5 includes multiple second propulsor rotors 24 rotatably driven by the low speed rotating structure 68. These second propulsor rotors 24 may rotate about a common axis. Alternatively, each second propulsor rotor 24 may rotate about a discrete axis where, for example, the second propulsor rotors 24 are laterally spaced from one another and coupled to the low speed rotating structure 68 through a power splitting geartrain 102.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A propulsion system (20) for an aircraft, comprising:
a gas turbine engine core (26) including a compressor section (46), a combustor section (47), a turbine section (48) and a rotating structure (68), the rotating structure (68) comprising a turbine rotor (60) within the turbine section (48);
a first propulsor rotor (22) rotatably driven by the rotating structure (68) during a first mode and a second mode, the first propulsor rotor (22) comprising a plurality of variable pitch blades (30), the plurality of variable pitch blades (30) comprising a first blade (30) configured to pivot between a thrust position and an idle position, the first blade (30) in the thrust position during the first mode, and the first blade (30) in the idle position during the second mode; and
a second propulsor rotor (24) rotatably driven by the rotating structure (68) during the second mode.

2. The propulsion system (20) of claim 1, further comprising a transmission (74) configured to:
decouple the second propulsor rotor (24) from the rotating structure (68) during the first mode; and
couple the second propulsor rotor (24) to the rotating structure (68) during the second mode.

3. The propulsion system (20) of claim 1 or 2, wherein the second propulsor rotor (24) comprises a plurality of fixed pitch rotor blades (38).

4. The propulsion system (20) of claim 1, 2 or 3, wherein:
the first propulsor rotor (22) is rotatable about an axis (28); and
an angle (98) between a chord line (96) of the first blade (30) in the thrust position and the axis (28) is less than sixty degrees.

5. The propulsion system (20) of any preceding claim, wherein:
the first propulsor rotor (22) is rotatable about an axis (28); and
an angle (98') between a chord line (96) of the first blade (30) in the idle position and the axis (28) is greater than seventy degrees.

6. The propulsion system (20) of any preceding claim, wherein the first blade (30) pivots at least twenty degrees between the forward thrust position and the idle position.

7. The propulsion system (20) of any preceding claim, wherein:
the first propulsor rotor (22) is configured to generate at least twenty times more thrust during the first mode than during the second mode; and/or
the first propulsor rotor (22) is configured to generate thrust during the first mode and generate substantially no thrust during the second mode.

8. The propulsion system (20) of any preceding claim, wherein:
the first propulsor rotor (22) is configured to generate horizontal thrust during the first mode; and
the second propulsor rotor (24) is configured to generate vertical lift during the second mode.

9. The propulsion system (20) of any preceding claim, wherein:
the first propulsor rotor (22) is rotatable about a first axis (28); and
the second propulsor rotor (24) is rotatable about a second axis (32) that is angularly offset from the first axis (28).

10. The propulsion system (20) of any preceding claim, wherein:
the first propulsor rotor (22) comprises a ducted rotor; and/or
the second propulsor rotor (24) comprises an open rotor.

11. The propulsion system (20) of any preceding claim, further comprising a geartrain (72) coupling the rotating structure (68) to the first propulsor rotor (22) during the first mode and the second mode, wherein, optionally, the geartrain (72) couples the rotating structure (68) to the second propulsor rotor (24) during the second mode.

12. The propulsion system (20) of any preceding claim, wherein:
the second propulsor rotor (24) is one of a plurality of second propulsor rotors (24) rotatably driven by the rotating structure (68) during the second mode; and/or
the gas turbine engine core (26) further includes a second rotating structure (64), and the second rotating structure (64) includes a compressor rotor (58) within the compressor section (46) and a second turbine rotor (59) within the turbine section (48).

13. A propulsion system (20) for an aircraft, comprising:
a gas turbine engine core (26) including a compressor section (46), a combustor section (47), a turbine section (48) and a rotating structure (68), the rotating structure (68) comprising a turbine rotor (60) within the turbine section (48);
a first propulsor rotor (22) coupled to the rotating structure (68) during a first mode and a second mode, the first propulsor rotor (22) rotatable about an axis (28) and comprising a plurality of variable pitch blades (30), the plurality of variable pitch blades (30) comprising a first blade (30) movable between a first position during the first mode and a second position during the second mode, a first angle (98) between a chord line (96) of the first blade (30) in the first position and the axis (28) less than sixty degrees, and a second angle (98') between the chord line (96) of the first blade (30) in the second position and the axis (28) greater than seventy degrees;
a second propulsor rotor (24); and
a transmission (74) configured to couple the rotating structure (68) to the second propulsor rotor (24) during the second mode.

14. The propulsion system (20) of claim 13, wherein:
the first propulsor rotor (22) is configured to generate propulsive power in a first direction during the first mode; and
the second propulsor rotor (24) is configured to generate propulsive power in a second direction during the second mode.

15. A propulsion system (20) for an aircraft, comprising:
a gas turbine engine core (26) including a compressor section (46), a combustor section (47), a turbine section (48) and a rotating structure (68), the rotating structure (68) comprising a turbine rotor (60) within the turbine section (48);
a first propulsor rotor (22) rotatably driven by the rotating structure (68) during a first mode and a second mode, the first propulsor rotor (22) configured to generate horizontal thrust during the first mode, and the first propulsor rotor (22) configured to generate substantially no thrust during the second mode; and
a second propulsor rotor (24) rotatably driven by the rotating structure (68) during the second mode, the second propulsor rotor (24) configured to generate vertical lift during the second mode, wherein, optionally:
the first propulsor rotor (22) comprises a plurality of variable pitch blades (30); and
the plurality of variable pitch blades (30) comprise a first blade (30) configured to pivot between a thrust position during the first mode and an idle position during the second mode.
